# EUROPEAN PATENT SPECIFICATION

(11) **EP 2 604 661 B1**
(45) Date of publication and mention of the grant of the patent: **25.01.2017**
(21) Application number: 11009781.3
(22) Date of filing: 12.12.2011
(51) Int. Cl.: C09D 5/00

(54) **CORROSION INHIBITING PIGMENTS AND METHODS FOR PREPARING THE SAME**
KORROSIONSHEMMENDE PIGMENTE UND HERSTELLUNGSVERFAHREN DAFÜR
PIGMENTS INHIBITEURS DE LA CORROSION ET LEURS PROCÉDÉS DE PRÉPARATION

(43) Date of publication of application: 19.06.2013
(73) Proprietor: Max-Planck-Gesellschaft zur Förderung der Wissenschaften e.V., 80539 München (DE)
(72) Inventor: Shchukin, Dmitry, 13353 Berlin (DE); Grigoriev, Dmitry O., 13437 Berlin (DE); Möhwald, Helmuth, 55411 Bingen (DE)
(74) Representative: Katzameyer, Michael

(56) References cited:
- EP-A1- 1 832 629
- WO-A1-2009/062518
- WO-A2-2005/007758
- US-A1- 2003 175 347

## Description

### Background

Corrosion of metals is one of the main destruction processes of metallic structures leading to huge economic losses. Commonly, polymer coating systems are applied on the metal surface which provide a dense barrier for the corrosive species in order to protect metal structures from the corrosion attack. When the barrier is damaged and the corrosive agents penetrate to the metal surface the coating system is not able to stop the corrosion process. A rather effective solution for active protection of metals is to employ chromate-containing conversion coatings. However, the hexavalent chromium species can be responsible for several diseases including DNA damage and cancer, which is the main reason for banning Cr⁶⁺-containing anticorrosion coatings in Europe from 2007.

Organically modified silicates are hybrid organic-inorganic materials formed through hydrolysis and condensation of organically modified silanes with traditional alkoxide precursors and could be used as an alternative to the traditional anticorrosion coatings based on Cr VI (C.J. Lund, P.D. Murphy, M.V. Plat, Silane and Other Coupl. Agents. 1992, 1, 423; S.H. Cho, H.M. Andersson, S.R. White, N.R. Sottos, P.V. Braun, Adv. Mater. 2006, 18 997; K. Bonnel, C. Le Pen, N. Peabeare, Electroch. Act. 1999, 44, 4259).

Another approach to prevent corrosion propagation on metal surfaces is its suppression using physical-chemical reactions of corrosion to initiate of inhibitor activity. The corrosion process itself can be a stimulus triggering the release of a healing component (e.g., inhibitors) from the coating. A few coatings with so-called self-healing effect were explored up to now (D.G. Shchukin, S.V. Lamaka, K.A. Yasakau, M.L. Zheludkevich, M. G. S. Ferreira, H. Möhwald, J. Phys. Chem. C. 2008, 112, 958). Ion-exchange resins can release inhibitors in response to reactions with corrosive ions (M.L. Zheludkevich, R. Serra, M.F. Montemor, M.G.S. Ferreira, Electrochem. Commun. 2005, 7, 836). Monomer-filled capsules introduced into polymer coatings are capable of healing the defects in the coating by releasing encapsulated monomer followed by polymerization and sealing of the defected area (S.R. White, N.R. Sottos, P.H. Geubelle, J.S. Moore, M.R. Kessler, S.R. Sriram, E.N. Brown, S. Viswanathan, Nature. 2001, 409, 794).

US 5,705,191 relates to a method for releasing an active agent into a use environment, by disposing this active agent within the lumen of a population of tubules with a preselected release profile. The preselected release profile may be achieved by controlling the length or length distribution of the tubules or by placing degradable endcaps over some or all of the tubules in the population.

EP 06 004 993.9 discloses a corrosion inhibiting pigment composed of nanoscale reservoirs which comprise a polymer or polyelectrolyte shell which is sensitive to a specific trigger, and are capable to release said inhibitor after action of said trigger, e.g. a change of pH induced by corrosion events.

However, even the sophisticated "self-healing" anti-corrosive coatings most recently developed are still improvable with respect to some properties such as the speed of healing a defect in response to a corrosion event and the efficiency of a controlled release of corrosion inhibitor. Moreover, it is very desirable to have active multifunctional pigments and/or coatings which provide not only corrosion protection but also protection against adhesion and propagation of organisms, in particular algae, fungi and microoroganisms, on a broad range of surfaces, including metallic and polymeric surfaces.

Thus, an object of the present invention is to provide new, effective and broadly applicable means for providing active corrosion and anti-fouling protection, in particular with self-healing ability, which radically improve the long-term performance of metallic and polymeric substrates and avoid the drawbacks of the prior art.

Said problem is solved according to the present invention by providing a corrosion and/or fouling inhibiting pigment according to present claims 1-8, the methods for preparing the same according to claims 9-12 and a method for corrosion and/or antifouling protection using said pigment according to claim 13.

### Description of the invention

The pigment according to the present invention comprises reservoirs of encapsulated corrosion inhibitors and/or biocides for active corrosion and/or antifouling protection of metallic and polymeric products and structures, wherein the reservoirs having average dimensions in the range 10-50000 nm comprise a porous surface/interface and a porous or empty interior and stimuli-sensitive stoppers which are capable to release an encapsulated inhibitor or biocide outside said reservoir upon action of a stimulus which is selected from the group consisting of an external electromagnetic field, changes in local pH, ionic strength and ambient temperature, wherein said stimuli-sensitive stoppers are the result from a chemical or physical interaction between encapsulated corrosion inhibitor and/or biocide or solvent/dispersing agent and an additional external compound and prevent the release of an encapsulated inhibitor or biocide towards the reservoir exterior in the absence of said stimulus.

A preferred stimulus is a change of pH or electromagnetic radiation.

The use of electromagnetic radiation enables to open the reservoirs locally in parts of the coating damaged by a corrosion process while the other intact part of the coating remains closed. In this method, the area of the opening may be determined by the irradiation focus and/or the release of loaded material may be regulated by the dose and intensity of irradiation.

Typically, the kind of irradiation is selected from UV, visible or IR irradiation and preferably the electromagnetic irradiation involves a laser irradiation. Generally, the wavelength for UV irradiation is in a range of from 200 nm to 400 nm, the wavelength for visible light irradiation in a range from 400 nm to 800 nm and the IR wavelength in a range from 800 nm to 3500 nm. The intensity of irradiation may vary over a broad range, i.a. depending on the specific coating and container materials and wavelength of the electromagnetic radiation used.

In the pigment of the invention, the stimuli-sensitive stoppers are situated at the outer end of pores in a porous reservoir scaffold or in pores of a reservoir shell.

More specifically, the reservoirs with a porous or empty interior comprise mesoporous or microporous oxide, nitride, carbide or fluoride particles, halloysites, mineral clays, zeolites, layered double hydroxides (LDH), carbon nanotubes, meso- and microporous carbon materials, polymer gels and core-shell oxide, nitride, carbide or fluoride materials with empty inner interior and porous shell.

In particular, if the reservoir comprises a porous shell, said shell may be composed of any inorganic or organic material which, apart from the pores is essentially impermeable for the active compound(s) and solvent(s) and/or dispersing agents, if any, used for introducing the active material into the reservoirs. More specifically, the shell is composed of a material selected from the group comprising mesoporous or microporous oxides, halloysites, clays, zeolites, layered double hydroxides (LDH), carbon nanotubes, polymer gels.

Typically, the reservoirs have a mean diameter in the range of from 10 nm to 50 µm, preferably from 20 nm to 5 µm, more preferred from 50 nm to 500 nm. Preferably the particles are mesoporous, having a mean pore size of from 1 nm to 200 nm.

Generally, the lower size of the pores is limited by the size of the molecule of corrosion inhibitor or biocide to be incorporated into the pores.

The corrosion inhibitor to be stored in the reservoirs of the pigment of the present invention may be any corrosion inhibitor selected from the following group of compounds which is suitable for the intended purpose. The choice of the inhibitor will depend, i.a., from the specific metallic products and structures to be protected, from the environmental conditions and operating conditions of the corrosion-protected products and other factors which will be evident for the skilled person in the art.

Specifically, the corrosion inhibitor comprises a compound selected from the group consisting of an organic compound containing one or more amino groups, an azole compound or a derivative thereof, a thiazole compound or a derivative thereof, an imidazole compound or a derivative thereof, an organic compound containing one or more carboxyl groups or salts of carboxylic acids, an organic compound containing one or more pyridinium or pyrazine groups, one or more Schiff bases, benzotriazole, mercaptobenzothiazol, quinoline, quinaldic acid or quinolinol, H₂TiF₆ acid and its derivatives, phosphates, nitrites, silicates, molybdates, borates, iodates, permanganates, tungstates, vanadates, cations of one or more metals selected from the group comprising lanthanides, magnesium, calcium, titanium, zirconium, yttrium, chromium and silver, alkoxysilanes and their derivatives containing amino, imino, carboxy, isocyanato, or thiocyanato groups, silyl esters, halogenated alkoxysilanes, silazanes and derivatives or blends thereof.

More specifically, the corrosion inhibitor is selected from the group comprising one or more amino groups, an azole compound or a derivative thereof, a thiazole compound or a derivative thereof, an imidazole compound or a derivative thereof, benzotriazole, mercaptobenzothiazol, quinoline, quinaldic acid or quinolinol, H₂TiF₆ acid and its derivatives, phosphates, molybdates, borates, tungstates, vanadates, cations of lanthanides.

The inhibitor may also comprise two or more compounds selected from the above specified classes of inhibitors.

The biocide to be stored in the reservoirs of the pigment of the present invention may be any biocide selected from the following group of compounds which is suitable for the intended purpose. The choice of the biocide will depend, i.a., from the specific products and structures to be protected, from the environmental conditions and operating conditions of the protected products and other factors which will be evident for the skilled person in the art.

Specifically, the biocide comprises a compound selected from the group consisting of tributyltin compounds and other organotin derivatives, copper compounds, quaternary ammonium compounds (Quats), chlorothalonil, methylene bis(thiocyanate), captan, pyridiniumtriphenylboron, diuron, halogenated alkyliso-thiazolin, a substituted isothiazolone such as 4,5-dichloro-2-n-octyl-4-iso-thiazolin-3-one (DCOIT), thiuram, tetraalkyl thiuram disulfide and their derivatives, zinc oxide, zinc pyrithione, zinc ethylenebis(dithiocarbamate) (zineb), copper pyrithione, dichlorofluanid, TCMS pyridine and thiocyanomethylthio-benzothiazole (TCMTB), halogenides of trimethoxysilyl quaternary ammonium compounds (quaternary alkoxysilyl compounds), 2-methylthio-4-t-butylamino-6-cyclopropyl-amino-s-triazine (cyclobutryn, also sold as irgarol), 2-(thio-cyanomethylthio)benzothiazole, 2,4,5,6-tetrachloro-isophthalonitrile, tolylfluanid, 2,3,5,6-tetrachloro-4-(methylsulfonyl)pyridine and derivatives or blends thereof.

More specifically, the biocide is selected from the group comprising copper compounds, quaternary ammonium compounds (Quats), captan, diuron, halogenated alkyliso-thiazolin, a substituted isothiazolone such as 4,5-dichloro-2-n-octyl-4-iso-thiazolin-3-one (DCOIT), thiuram and their derivatives, zineb, 2-methylthio-4-t-butylamino-6-cyclopropyl-amino-s-triazine, zinc or copper pyrithione, dichlorofluanid, TCMS pyridine and thiocyanomethylthio-benzothiazole (TCMTB), tolylfluanid.

The biocide may also comprise two or more compounds selected from the above specified classes of biocides.

The term "derivative" as used herein, means any compound or conjugate/aggregate of compounds comprising the basic structural element or functional group, e.g. a derivative of an azole compound may be any compound or conjugate/aggregate of compounds comprising at least one azole moiety, a derivative of H₂TiF₆ acid may be, e.g., a salt or complex thereof.

The pigment according to the present invention is characterized in that the stimuli-sensitive stoppers comprise the products of an interfacial chemical or physical reaction between a) an internal compound within the reservoirs which is the active compound, i.e. corrosion inhibitor and/or biocide, or a solvent and/or dispersing agent used for incorporation of the inhibitor or biocide into the reservoir and b) at least one external compound.

In a more specific embodiment, the stimuli-sensitive stoppers comprise the products of an interfacial chemical or physical reaction between a) encapsulated inhibitor as defined above or biocide as defined above or a solvent and/or dispersing agent used for incorporation of the inhibitor or biocide into the reservoir and b) at least one compound selected from the group consisting of ionic compounds, including metal salts and polyelectrolytes, biopolymers such as proteins, aminoacids, polysaccharides, such as casein, lactoglobulin, albumin, keratin, myosin, tubulin, collagen (gelatin), lysozyme, agarose, cellulose, alginic acid, dextran, chitosan, polyarginine, polyglycin, polyglutamic acid, polyaspartic acid, and derivatives, copolymers or blends thereof.

In another specific embodiment, the stimuli-sensitive stoppers comprise the products of an interfacial chemical or physical reaction between a) encapsulated inhibitor as defined above or biocide as defined above or a solvent and/or dispersing agent used for incorporation of the inhibitor or biocide into the reservoir and b) at least one compound selected from the group consisting of compounds having isocyanate, acrylate, cyanoacrylate, vinyl, epoxy, hydroxyl, amino, or imino moieties, polyunsaturated fatty acids, drying oils and derivatives, comonomers or blends thereof.

In a specific embodiment, the products of said interfacial chemical or physical reaction comprise an ionic complex or an aggregate which is the result of covalent interactions or non-covalent interactions, such as electrostatic or van der Waal's forces, between at least one component a) and at least one component b) as defined above.

In another specific embodiment, the stimuli-sensitive stoppers comprise the products of an interfacial physical process which is initiated or accelerated by the encapsulated inhibitor as defined above or biocide as defined above or a solvent and/or dispersing agent used for incorporation of the inhibitor or biocide into the reservoir in interaction with at least one compound selected from the group consisting of organic polymeric nanoparticles, polymers such as polystyrene, polyacryl, polycarbonate, polyester, polyterpene, polyanhydride, polyurethane, polyamide, and derivatives, copolymers or blends thereof.

More specifically, said interfacial physical process is interfacial precipitation, coacervation, or gelation.

In preferred embodiments of the invention, the stimuli-sensitive stoppers comprise the products of the reaction of a corrosion inhibitor selected from the group of specific inhibitors from above or of a biocide selected from the group of specific biocides from above or of a solvent/dispersing agent selected from water, the group of polar water miscible solvents/dispersing agents composed of ketones, aldehydes, carboxyacids, alcohols, esters, ethers, amines, imines, imides, organometallics and their derivatives; the group of unpolar water immiscible or sparingly miscible dispersing agents composed of saturated, cyclic or unsaturated hydrocarbons, silicone oil, ketones, aldehydes, fatty carboxyacids and alcohols, esters, ethers, fatty amines, imines, imides, organometallics, with at least one external compound selected from the group consisting of ionic compounds, including metal salts and polyelectrolytes, biopolymers, compounds having isocyanate, acrylate, cyanoacrylate, vinyl, epoxy, hydroxyl, amino, or imino moieties, polyunsaturated fatty acids and derivatives, polymers such as polystyrene, polyacryl, polycarbonate, polyester, polyurethane and derivatives.

A second aspect of the present invention relates to a method of preparing this pigment comprising the steps of
a) providing reservoirs with average dimensions in the range 10-50000 nm having a porous surface/interface and a porous or empty interior;
b) introducing corrosion inhibitor and/or biocide into the reservoirs;
c) contacting the corrosion inhibitor and/or biocide containing reservoirs after step b) with at least one external compound capable to react with the corrosion inhibitor and/or biocide or the solvent/dispersing agent used for introducing the inhibitor or biocide into the reservoir;
d) reacting the external compound with the corrosion inhibitor and/or biocide or the solvent/dispersing agent used for introducing the inhibitor or biocide to form stimulus-sensitive stoppers at the interface between the bulk medium surrounding the reservoir and containing said external compound and the outer end of pores of the reservoir.

In a specific embodiment, the chemical or physical reaction is a polymerization, in particular a free radical polymerization, and the at least one external compound comprises one or more monomers.

In some preferred embodiments of the invention, the method for preparing the inventive pigment comprises ultra-sonification of the corrosion inhibitor and/or biocide containing reservoirs obtained in step b) or of the mixture obtained in step c). In a typical embodiment, free radicals are generated in the course of the ultrasound treatment and serve as activators for a polymerization reaction.

In another specific embodiment, the external compound is provided as an oil-in-water emulsion. This emulsion may, e.g., comprise one or more monomeric reactants for a polymerization reaction.

Many corrosion inhibitors and/or biocides are simultaneously catalysts or accelerators of diverse polymerization processes. For instance, compounds from the thiurams group (see also the more specific Example 1 below) can strongly decrease the activation energy of the cross-linking reaction proceeding at the curing of artificial rubbers such as butadiene rubber, styrene-butadiene rubber, acrylonitrile butadiene styrene rubber, acrylonitrile butadiene rubber, etc. In course of this reaction, the polysulfur bridges are formed between some allyl hydrogens situated in the vicinity of double bonds in the reacting en-monomers or en-prepolymers. Being introduced into pores of the pigment particles, catalysts or accelerator compounds like thiurams form at the outer ends of these pores sites where the above mentioned polymerization reaction will preferably run making rubber stoppers preventing the filled biocides or/and inhibitors from the undesired contacts with the surrounding medium and premature release.

Thus, in a preferred embodiment of the invention the stimuli-sensitive stoppers are formed by the interfacial polymerization reaction of an external compound comprising at least one en-monomer or en-prepolymer (in particular monomers or prepolymers yielding artifical rubber products) in the presence of an internal compound comprising at least one thiuram compound.

On the other side, numerous corrosion inhibitors and/or biocides are organic heterocyclic compounds carrying such atoms like oxygen, nitrogen, sulphur, phosphorus and halogens in their structure and enable the formation of quite stable complexes with many ionic species (cations as well as anions) possessing low solubility products in aqueous media under normal conditions. These complexes can serve as material of the stoppers in the presented invention at the outer ends of pores in the pigment particles. Start of the corrosion process leads to the changes of the ambient conditions for these stoppers like increase or decrease of pH, occurrence of ionic products of corrosion etc. disturbing the stability of complexes and causing their gradual or immediate dissolution. As a result, the release of inhibitor or/and biocide triggered by the onset of corrosion process takes place on demand. A particular situation realizable according this general scenario is described in details in the Example 5.

Thus, in another preferred embodiment of the invention the stimuli-sensitive stoppers are formed by the interfacial complexation of an internal organic heterocyclic compound carrying such atoms like oxygen, nitrogen, sulphur, phosphorus and halogen with at least one external compound which is a ionic species (cations as well as anions), including metal salts and polyelectrolytes.

A further related aspect of the invention is a method of preventing or inhibiting the corrosion or fouling of a metal or polymer product or structure comprising incorporation of the pigment according to the present invention to pre-treatments, primers, top coats, formulations of polymer coatings, powder coatings, paints and concretes, in particular in form of a powder, paste or a suspension.

Additional anti-corrosive applications of the pigments of the present invention will be evident for the skilled person in the art and are encompassed by the present invention as well.

### Brief Description of the Drawings

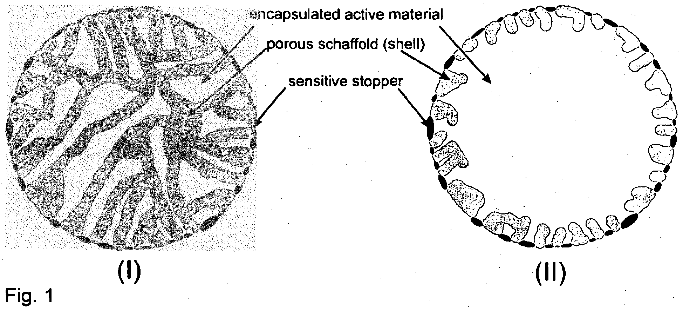

**Fig. 1****.** Schematic illustration of two alternative embodiments of the reservoirs used in the invention; (I) porous particle scaffold, (II) porous core-shell system

### EXAMPLE 1

A. Mesoporous silica (SiO₂) nanoparticles were impregnated by a saturated solution of the mixed biocides tetrabenzyl thiuram disulfide (TBzTD) and tetramethylthiuram disulfide (TMTD) in toluene saturated previously by sulfur acting also as a broad spectrum biocide. Impregnated nanoparticles were dried in vacuum to remove the solvent. After that, the dry particles were quickly rinsed by toluene to remove the possible sediment of mixture rested on the particle surface sites around the pores and dried again. Then, silica nanoparticles were dispersed in the aqueous medium (5 wt/v% suspension) by means of non-ionic polymeric surfactant polyvinyl alcohol (PVA, Mw = 8000-9000, 80% hydrolyzed, Sigma-Aldrich, 1 wt % solution).
B. A second mixture consisting of 1 v/v% oil-in-water emulsion of 2-propenenitrile, 1,3-butadiene, and 1,2-butadiene in the 1 wt% aqueous solution of PVA (see above) was prepared.
C. The oil-in-water emulsion prepared on the step B was then dropwise added to the aqueous suspension of impregnated silica prepared on the step A under continuous ultrasound treatment of the entire mixture.
D. Free radicals generated in course of ultrasonication of mixture served as activators for the polymerization reaction yielding the Nitrile butadiene rubber pre-polymers. During the intensive stirring of the mixture induced also by ultrasonication, numerous collisions of impregnated silica nanoparticles with the emulsion droplets took place. Outer ends of pores filled by the mixture of thiurams and sulfur (see above, step A) formed the patches on the particles surface that act as fast-curing ultra accelerators for the Nitrile butadiene rubber polymers (specific curing ability of thiurams class of compounds). This spatially benefited curing process driven by ultrasound energy formed the stoppers at the end of each pore and, thus, sealed the encapsulated thiurams inside of mesoporous silica carriers. The obtained containers were separated by centrifugation, washed firstly by toluene and then three times by MilliQ water under neutral pH conditions and resuspended in aqueous medium by means of PVA.

Because of the specific sensitivity of short Nitrile butadiene rubber polymer in the stoppers to strong to medium acidic environment and to UV-radiation, these factors could be used as particular triggers to open the stoppers on demand.

### EXAMPLE 2

A. Oil-soluble corrosion inhibitor stearoyl sarcosine (available as for example Hamposyl S from Hampshire) was dissolved in the Linseed oil forming 10 wt% solution.
B. 100 g hydrophobically modified silica porous microparticles (for instance, Syloid^{®} C 906 from GRACE) were impregnated with 200 g of oil solution prepared on the step A.
C. 5 wt%/v% rough suspension of silica particles obtained on the step B in aqueous 0.5 wt% solution of Pluronic 123 was prepared using rotor-stator high speed homogenizer at 16 Krpm for 5 minutes.
D. 200 ml rough suspension prepared on the step C was treated by intensive ultrasound, and upon continuous sonication 5 ml 0.5 wt% aqueous solution of hexaamminecobalt(III) nitrate were added dropwise to the reaction mixture. Free radicals generated in course of ultrasonication of mixture caused the polymerization of polyunsaturated fatty acid in linseed oil catalyzed additionally by Co(III) ions. This polymerization can take place however only at the interface between outer ends of pores in the silica microparticles used and surrounding aqueous medium because of mutual immiscibility of free radical compounds and catalyst from water phase and polyunsaturated fatty acid containing in the oil. As a result, the stoppers at the pores outer ends were formed, encapsulating the oil-soluble corrosion inhibitor stearoyl sarcosine in the silica microparticle carriers.

Because of the specific sensitivity of polyolefin acidic stoppers to media with high pH values, a transition to pH ranges above 10 results in the stoppers dissolution and inhibitor release. The triggering effect of high pH is revealed by deprotonation of stearoyl sarcosine in this range and subsequent sharp increase of its solubility.

### EXAMPLE 3

A. 80 g mesoporous carbon microparticles were impregnated by with 20 g trichlorooctadecyl silane (TCOS) and 60 g trimethoxyoctyl silane (TMOcS) acting as water-repelling and anticorrosive agents. After impregnation, the particles were quickly rinsed by chloroform to remove the possible excess of TCOS and TMOcS from the particle surface sites around the pores and dried.
B. 20 g tetramethoxy silane (TMOS) were added to 100 ml MilliQ water at pH 5 and stirred for 60 minutes until the hydrolysis of TMOS was completed.
C. To the mixture prepared on the step B, the amount of non-ionic surfactant Triton X-100 needed for the preparation of 0.5 wt% solution of surfactant was added and completely dissolved under mild stirring.
D. The pH of mixture prepared on the step C was very quickly enhanced to the value above 12 by addition of small amounts of concentrated NaOH solution.
E. Immediately after step D, the impregnated carbon microparticles were rapidly added to the mixture prepared on the step D and mixed very vigorously by means of high speed homogenizer at 13.5 Krpm for 10 minutes.
F. Due to the very fast hydrolysis of TCOS at the outer end of pores in the carbon microparticles and due to subsequent condensation of pre-hydrolyzed of TMOS on these sites, the silica-stoppers were formed sealing the encapsulated mixture of water-repelling and anticorrosive agents TCOS and TMOcS inside microparticulate carbon carriers.

Increase of medium's pH as a consequence of corrosion process development to the range above 11 will cause an increase of the negative charge of microporous carbon scaffold and therefore a strong electrostatic repulsion between this scaffold and stoppers also possessing a high negative charge at this pH. Thus, pH-enhancement over 11 in the medium can act as a trigger for the inhibitor release. Another release trigger could be a simple mechanical breakdown of the carbonaceous microcarriers.

### EXAMPLE 4

A. Mesoporous titania (TiO₂) microparticles were repeatedly impregnated by the corrosion inhibitor ammonium heptamolybdate tetrahydrate (AM) from its saturated solution in dimethylsulfoxide (DMSO) and then dried in vacuum to remove excess of solvent. After that, the dry particles were quickly rinsed by DMSO to remove the possible sediment of AM rested on the particle surface sites around the pores and dried again.
B. 0.5 wt % solution of sodium docusate (AOT) in Diethylbenzene was prepared under continuous moderate stirring at room temperature.
C. 10 g powder of mesoporous titania microparticles impregnated by AM on the step A, were dispersed in the 100 ml organic medium prepared on the step B under vigorous stirring by means of high speed homogenizer at 16 Krpm for 10 minutes.
D. 5 ml of 5 wt% solution of ethyl cyanoacrylate in Diethylbenzene were added dropwise to 50 ml suspension obtained in the step C.
E. After addition was completed, the temperature of mixture prepared on the step D was gradually enhanced to 90° C. This temperature caused the loss of water molecules from crystalohydrate AM and causes the polymerization reaction of ethyl cyanoacrylate at the outer ends of pores in the titania carries because of diffusion of liberated water molecules toward the solid-organic medium interface. As a result, the polymeric cyanoacrylate stoppers at the end of these pores were formed sealing the AM inhibitor inside the microscale titania carriers.

Because of the low stability of cyanoacrylate polymers at high pH values, the increase of this value due to local corrosion development is able to cause the pH-triggered release of corrosion inhibitor.

### EXAMPLE 5

A. Mesoporous titania (TiO₂) microparticles were impregnated by the saturated solution of corrosion inhibitor and biocide 8-hydroxyquinoline (8-HQ) in chloroform. After solvent evaporation, the dry particles were quickly rinsed by chloroform to remove the possible sediment of 8-HQ rested on the particle surface sites around the pores and dried again. Then, titania microparticles were dispersed in the aqueous medium as 5 wt/v% suspension by means of non-ionic polymeric surfactant polyvinyl alcohol (PVA, Mw = 8000-9000, 80% hydrolyzed, Sigma-Aldrich, 1 wt % solution) in the neutral pH range between 5 and 8, better between 6.5 and 7.5.
B. 1000 ml of 10 wt% Ca(NO₃)₂·4H₂O solution in MilliQ water was prepared in the beaker under continuous stirring and mild heating upon full dissolution of salt. The pH of this solution was adjusted to value 5.
C. 100 ml of suspension prepared in step A were added dropwise and under vigorous stirring to the solution prepared on the step B. Due to equal charge of titania particles surface and Ca²⁺ cations on the one hand and due to low solubility of complex between Ca²⁺ cations and molecules of 8-HQ in the pH window used, the stoppers made of this complex were formed explicitly at outer ends of pores whereas the titania surface around them remained uncovered. These complexes seal the encapsulated 8-HQ in the interior of microparticulate titania carriers. The obtained containers were separated by centrifugation, washed three times by MilliQ water under neutral pH conditions and resuspended in aqueous medium by means of PVA.

Due to specific sensitivity of Ca²⁺/8-HQ complexes in the stoppers to strong acidic and basic pH values, increase or decrease of pH during the corrosion development could be used as trigger for the on demand opening of stoppers. Moreover, because of the much lower solubility of 8-HQ complexes with other metal cations that may occur as corrosion products (Fe³⁺, Zn²⁺, Al³⁺, Cd²⁺, Cu²⁺), the Ca²⁺/8-HQ complexes in the stoppers can be easily dissolved by these specific triggers too and open the pores for the free release of 8-HQ inhibitor.

## Claims

1. A pigment comprising reservoirs of encapsulated corrosion inhibitors and/or biocides for active corrosion and/or antifouling protection of metallic and polymeric products, wherein the reservoirs having average dimensions in the range 10-50000 nm comprise a porous surface/interface and a porous or empty interior and stimuli-sensitive stoppers which are situated at the outer end of pores in a porous reservoir scaffold or in pores of a reservoir shell and are the result from an interfacial chemical reaction between encapsulated corrosion inhibitor and/or biocide or encapsulated solvent/dispersing agent and an additional external compound and which prevent the release of an encapsulated inhibitor or biocide towards the reservoir exterior in the absence of a stimulus which is selected from the group consisting of an external electromagnetic field, changes in local pH, ionic strength and ambient temperature and which causes the stoppers to release the corrosion inhibitor and/or biocide incorporated therein, wherein the corrosion inhibitor comprises a compound selected from the group consisting of an organic compound containing one or more amino groups, an azole compound or derivative thereof, a thiazole compound or derivative thereof, an imidazole compound or derivative thereof, an organic compound containing one or more carboxyl groups or salts of carboxylic acids, an organic compound containing one or more pyridinium or pyrazine groups, one or more Schiff bases, benzotriazole, mercaptobenzothiazol, quinoline, quinaldic acid or quinolinol, H₂TiF₆ acid and its derivatives, phosphates, nitrites, silicates, molybdates, borates, iodates, permanganates, tungstates, vanadates, cations of one or more metals selected from the group comprising lanthanides, magnesium, calcium, titanium, zirconium, yttrium, chromium and silver, alkoxysilanes and their derivatives containing amino, imino, carboxy, isocyanato, or thiocyanato groups, silyl esters, halogenated alkoxysilanes, silazanes and derivatives or blends thereof,
and wherein the biocide comprises a compound selected from the group consisting of tributyltin compounds and other organotin derivatives, copper compounds, quaternary ammonium compounds (Quats), chlorothalonil, methylene bis(thiocyanate), captan, pyridiniumtriphenylboron, diuron, halogenated alkylisothiazolin, a substituted isothiazolone such as 4,5-dichloro-2-n-octyl-- 4-iso-thiazolin-3-one (DCOIT), thiuram, tetraalkyl thiuram disulfide and their derivatives, zinc oxide, zinc pyrithione, zinc ethylenebis(dithiocarbamate) (zineb), copper pyrithione, dichlorofluanid, TCMS pyridine and thiocyanomethylthiobenzothiazole (TCMTB), halogenides of trimethoxysilyl quaternary ammonium compounds (quaternary alkoxysilyl compounds), 2-methyl-thio-4-t-butylamino-6-cyclopropyl-amino-s-triazine (irgarol), 2-(thiocyanomethylthio)benzothiazole, 2,4,5,6-tetra-chloro-isophthalonitrile, tolylfluanid, 2,3,5,6-tetra-chloro-4-(methylsulphonyl)pyridine and derivatives or blends thereof.

2. The pigment according to claim 1, wherein the reservoirs comprise mesoporous particles having a mean pore size of from 1 nm to 200 nm.

3. The pigment according to claim 1 or 2, wherein the reservoirs with porous or empty interior comprise mesoporous or microporous oxide, nitride, carbide or fluoride particles, halloysites, mineral clays, zeolites, layered double hydroxides (LDH), carbon nanotubes, meso- and microporous carbon materials, polymer gels and core-shell oxide, nitride, carbide or fluoride materials with empty inner interior and porous shell.

4. The pigment according to any one of claims 1-3, wherein the stimuli-sensitive stoppers comprise the products of an interfacial chemical reaction between a) encapsulated inhibitor or biocide according to claim 1 or a solvent/dispersing agent used for incorporation of the inhibitor or biocide into the reservoir and b) at least one compound selected from the group consisting of ionic compounds, including metal salts and polyelectrolytes, biopolymers such as proteins, aminoacids, polysaccharides, such as casein, lactoglobulin, albumin, keratin, myosin, tubulin, collagen (gelatin), lysozyme, agarose, cellulose, alginic acid, dextran, chitosan, polyarginine, polyglycin, polyglutamic acid, polyaspartic acid, and derivatives, copolymers or blends thereof.

5. The pigment according to any one of claims 1-4, wherein the stimuli-sensitive stoppers comprise the products of an interfacial chemical reaction between a) encapsulated inhibitor or biocide according to claim 1 or a solvent/dispersing agent used for incorporation of the inhibitor or biocide into the reservoir and b) at least one compound selected from the group consisting of compounds having isocyanate, acrylate, cyanoacrylate, vinyl, epoxy, hydroxyl, amino, or imino moieties, polyunsaturated fatty acids, drying oils and derivatives, comonomers or blends thereof.

6. The pigment according to claim 4 or 5, wherein the stimuli-sensitive stoppers comprise the products of an interfacial chemical reaction between a) encapsulated inhibitor or biocide according to claim 1 and at least one component b) as defined in claim 4 or 5.

7. The pigment according to claim 4 or 5, wherein the products of said interfacial chemical reaction comprise an ionic complex or an aggregate which is the result of covalent interactions between at least one component a) and at least one component b) as defined in claim 4 or 5.

8. The pigment according to claim 6, wherein the products of said interfacial chemical reaction comprise an ionic complex or an aggregate which is the result of covalent interactions between a) encapsulated inhibitor or biocide according to claim 1 and at least one component b) as defined in claim 4 or 5.

9. A method of preparing the pigment according to any one of claims 1-8, comprising the steps of
a) providing reservoirs with average dimensions in the range 10-50000 nm having a porous surface/interface and a porous or empty interior;
b) introducing corrosion inhibitor and/or biocide into the reservoirs;
c) contacting the corrosion inhibitor and/or biocide containing reservoirs after step b) with at least one external compound capable to react with the corrosion inhibitor and/or biocide or the solvent/dispersing agent used for introducing the inhibitor or biocide into the reservoir;
d) reacting the external compound with the corrosion inhibitor and/or biocide or the solvent/dispersing agent used for introducing the inhibitor or biocide to form stimulus-sensitive stoppers at the interface between the bulk medium surrounding the reservoir and containing said external compound and the outer end of pores of the reservoir.

10. The method according to claim 9, which comprises ultrasonication of the corrosion inhibitor and/or biocide containing reservoirs obtained in step b) or of the mixture obtained in step c).

11. The method according to claim 9 or 10, wherein the chemical reaction is a polymerization, in particular a free radical polymerization, and the at least one external compound comprises one or more monomers.

12. The method according to any one of claims 9-11, wherein the external compound is provided as an oil-in-water emulsion.

13. A method of preventing or inhibiting the corrosion or fouling of a metal or polymer product comprising incorporation of the pigment according to any one of claims 1-8 to pre-treatments, primers, top coats, formulations of polymer coatings, powder coatings, paints and concretes, in particular in form of a powder, paste or a suspension.

## Patentansprüche

1. Pigment, umfassend Reservoire von verkapselten Korrosionsinhibitoren und/oder Bioziden, für den aktiven Schutz von metallischen und polymeren Produkten vor Korrosion und/oder Anwuchs, wobei die Reservoire, welche mittlere Dimensionen im Bereich von 10-50.000 nm aufweisen, eine poröse Oberfläche/Grenzfläche und ein poröses oder leeres Inneres sowie stimuli-sensitive Stopper umfassen, welche sich an den äußeren Enden von Poren in einem porösen Reservoir-Gerüst oder in Poren einer Reservoir-Hülle befinden und das Ergebnis einer chemischen Grenzflächenreaktion zwischen verkapseltem Korrosionsinhibitor und/oder Biozid oder verkapseltem Solvens/Dispergiermittel und einer zusätzlichen externen Verbindung sind und welche die Freisetzung von verkapseltem Inhibitor oder Biozid in den Bereich außerhalb des Reservoirs in Abwesenheit eines Stimulus verhindern, der aus der Gruppe bestehend aus einem externen elektromagnetischen Feld, Veränderungen von lokalem pH-Wert, Ionenstärke und Umgebungstemperatur ausgewählt ist und welcher die Stopper veranlasst, den Korrosionsinhibitor und/oder das Biozid, welche darin eingeschlossen sind, freizusetzen,
wobei der Korrosionsinhibitor eine Verbindung umfasst, welche aus der Gruppe ausgewählt ist, die aus einer organischen Verbindung, die eine oder mehrere Aminogruppen enthält, einer Azolverbindung oder einem Derivat davon, einer Thiazolverbindung oder einem Derivat davon, einer Imidazolverbindung oder einem Derivat davon, einer organischen Verbindung, die eine oder mehrere Carboxylgruppen enthält, oder Salzen von Carbonsäuren, einer organischen Verbindung, die eine oder mehrere Pyridinium- oder Pyrazingruppen enthält, einer oder mehreren Schiff'schen Basen, Benzotriazol, Mercaptobenzothiazol, Chinolin, Chinaldinsäure oder Chinolinol, Hexafluorotitansäure (H₂TiF₆) und deren Derivaten, Phosphaten, Nitriten, Silikaten, Molybdaten, Boraten, Iodaten, Permanganaten, Tungstaten, Vanadaten, Kationen von einem oder mehreren Metallen, die aus der Gruppe umfassend Lanthaniden, Magnesium, Calcium, Titan, Zirconium, Yttrium, Chrom und Silber ausgewählt sind, Alkoxysilanen und deren Derivaten, die Amino-, Imino-, Carboxy-, Isocyanat- oder Thiocyanatgruppen umfassen, Silylestern, halogenierten Alkoxysilanen, Silazanen und Derivaten oder Mischungen davon besteht,
und wobei das Biozid eine Verbindung umfasst, die aus der Gruppe ausgewählt ist, welche aus Tributylzinnverbindungen und anderen Organozinn-Derivaten, Kupferverbindungen, quaternären Ammoniumverbindungen ("Quats"), Chlorothalonil, Methylenbis(thiocyanat), Captan, Pyridiniumtriphenyl-Bor, Diuron, halogeniertem Alkylisothiazolin, einem substituierten Isothiazolin wie z.B. 4,5-Dichlor-2-n-oktyl-4-isothiazolin-3-on (DCOIT), Thiuram, Tetraalkylthiuramdisulfid und deren Derivaten, Zinkoxid, Zink-Pyrithion, Zink-Ethylenbis(dithio-carbamat) (Zineb), Kupfer-Pyrithion, Dichlorfluanid, TCMS-Pyridin und Thiocyanomethylthiobenzothiazol (TCMTB), Halogeniden von quaternären Trimethoxysilyl-Ammoniumverbindungen (quaternären Alkoxysilylverbindungen), 2-Methylthio-4-t-butylamino-6-cyclopropyl-amino-s-triazin (Irgarol), 2-(Thiocyanomethylthio)benzothiazol, 2,4,5,6-tetrachlorisophthalonitril, Tolylfluanid, 2,3,5,6-tetrachlor-4-(methylsulfonyl)pyridin und Derivaten oder Mischungen davon besteht.

2. Pigment nach Anspruch 1, wobei die Reservoire mesoporöse Partikel mit einer mittleren Porengröße von 1 nm bis 200 nm umfassen.

3. Pigment nach Anspruch 1 oder 2, wobei die Reservoire mit porösem oder leerem Inneren mesoporöse oder mikroporöse Oxid-, Nitrid-, Carbid- oder Fluorid-Partikel, Halloysites, mineralische Tone, Zeolithe, Doppelschicht-Hydroxide (LDH), Kohlenstoff-Nanoröhrchen, mesoporöse und mikroporöse Kohlenstoffmaterialien, Polymer-Gele und Core-Shell-Oxid-, Nitrid-, Carbid- oder Fluorid-Materialien mit einem leeren Innenraum und einer porösen Hülle umfassen.

4. Pigment nach irgendeinem der Ansprüche 1-3, wobei die stimuli-sensitiven Stopper umfassen die Produkte einer chemischen Grenzflächenreaktion zwischen a) verkapseltem Inhibitor oder Biozid nach Anspruch 1 oder einem für die Inkorporation des Inhibitors oder Biozids in das Reservoir verwendeten Solvens/Dispergiermittel und b) mindestens einer Verbindung, welche aus der Gruppe ausgewählt ist, die aus ionischen Verbindungen, einschließlich Metallsalze und Polyelektrolyte, Biopolymeren wie z.B. Proteine, Aminosäuren, Polysaccharide, z.B. Casein, Lactoglobulin, Albumin, Keratin, Myosin, Tubulin, Kollagen (Gelatine), Lysozym, Agarose, Cellulose, Algininsäure, Dextran, Chitosan, Polyarginin, Polyglycin, Polyglutaminsäure, Polyasparaginsäure und Derivaten, Copolymeren oder Mischungen davon besteht.

5. Pigment nach irgendeinem der Ansprüche 1-4, wobei die stimuli-sensitiven Stopper umfassen die Produkte einer chemischen Grenzflächenreaktion zwischen a) verkapseltem Inhibitor oder Biozid nach Anspruch 1 oder einem zur Inkorporation des Inhibitors oder Biozids in das Reservoir verwendeten Solvens/Dispergiermittel und b) mindestens einer Verbindung, welche aus der Gruppe ausgewählt ist, die aus Verbindungen mit Isocyanat-, Acrylat-, Cyanoacrylat-, Vinyl-, Epoxy-, Hydroxyl-, Amino- oder Iminogruppierungen, mehrfach ungesättigten Fettsäuren, Trockenölen und Derivaten, Comonomeren und Mischungen davon besteht.

6. Pigment nach Anspruch 4 oder 5, wobei die stimuli-sensitiven Stopper die Produkte einer chemischen Grenzflächenreaktion zwischen a) verkapseltem Inhibitor oder Biozid nach Anspruch 1 und mindestens einer Verbindung b) wie in Anspruch 4 oder 5 definiert umfassen.

7. Pigment nach Anspruch 4 oder 5, wobei die Produkte der chemischen Grenzflächenreaktion einen ionischen Komplex oder ein Aggregat, welches das Ergebnis von kovalenten Wechselwirkungen zwischen mindestens einer Komponente a) und mindestens einer Komponente b) wie in Anspruch 4 oder 5 definiert ist, umfassen.

8. Pigment nach Anspruch 6, wobei die Produkte der chemischen Grenzflächenreaktion einen ionischen Komplex oder ein Aggregat, welches das Ergebnis von kovalenten Wechselwirkungen zwischen a) verkapseltem Inhibitor oder Biozid nach Anspruch 1 und mindestens einer Komponente b) wie in Anspruch 4 oder 5 definiert ist, umfassen.

9. Verfahren zur Herstellung des Pigments nach irgendeinem der Ansprüche 1-8, umfassend die Schritte
a) Bereitstellen von Reservoiren mit mittleren Dimensionen im Bereich von 10-50.000 nm, die eine poröse Oberfläche/- Grenzfläche und ein poröses oder leeres Innere aufweisen;
b) Einführen von Korrosionsinhibitor und/oder Biozid in die Reservoire;
c) Kontaktieren der Korrosionsinhibitor und/oder Biozid enthaltenden Reservoire nach Schritt b) mit mindestens einer externen Verbindung, welche in der Lage ist, mit dem Korrosionsinhibitor und/oder dem Biozid oder dem zur Einführung des Inhibitors oder Biozids in das Reservoir verwendeten Solvens/Dispergiermittel zu reagieren;
d) Umsetzen der externen Verbindung mit dem Korrosionsinhibitor und/oder Biozid oder dem zur Einführung des Inhibitors oder Biozids verwendeten Solvens/Dispergiermittel, um stimuli-sensitive Stopper an der Grenzfläche zwischen dem Mediumvolumen, welches das Reservoir umgibt und die externe Verbindung enthält, und den äußeren Enden der Poren des Reservoirs zu bilden.

10. Verfahren nach Anspruch 9, welches die Ultrabeschallung der Korrosionsinhibitor und/oder Biozid enthaltenden Reservoire, die in Schritt b) erhalten wurden, oder der in Schritt c) erhaltenen Mischung umfasst.

11. Verfahren nach Anspruch 9 oder 10, wobei die chemische Reaktion eine Polymerisation, insbesondere eine Radikalpolymerisation, ist und die mindestens eine externe Verbindung ein oder mehrere Monomer(e) umfasst.

12. Verfahren nach irgendeinem der Ansprüche 9-11, wobei die externe Verbindung als eine Öl-in-Wasser-Emulsion bereitgestellt wird.

13. Verfahren zur Verhinderung oder Inhibierung der Korrosion oder des Anwuchses ("Fouling") eines metallischen oder polymeren Produkts, umfassend die Inkorporation des Pigments nach irgendeinem der Ansprüche 1-8 in Vorbehandlungen, Primer, Deckschichten, Formulierungen von Polymerbeschichtungen, Pulverbeschichtungen, Farben und Betonarten, insbesondere in Form eines Pulvers, einer Paste oder einer Suspension.

## Revendications

1. Pigment comprenant des réservoirs d'inhibiteurs de corrosion et/ou biocides encapsulés pour une protection contre la corrosion et/ou antisalissure active de produits métalliques et polymériques, dans lequel les réservoirs ayant des dimensions moyennes dans la plage de 10 à 50 000 nm comprennent une surface/interface poreuse et un intérieur poreux ou vide et des bouchons sensibles aux stimuli qui sont situés à l'extrémité externe de pores dans un échafaud de réservoir poreux ou dans des pores d'une coque de réservoir et sont la conséquence d'une réaction chimique interfaciale entre inhibiteurs de corrosion et/ou biocides encapsulés ou solvant/agent dispersant encapsulé et un composé externe additionnel et qui empêchent la libération d'un inhibiteur ou biocide encapsulé vers l'extérieur du réservoir en l'absence d'un stimulus qui est choisi dans le groupe consistant en un champ électromagnétique externe, des changements de pH local, la force ionique et la température ambiante et qui amène les bouchons à libérer l'inhibiteur de corrosion et/ou le biocide incorporé dans ceux-ci, dans lequel l'inhibiteur de corrosion comprend un composé choisi dans le groupe consistant en un composé organique contenant un ou plusieurs groupes amino, un composé azole ou un dérivé de celui-ci, un composé thiazole ou un dérivé de celui-ci, un composé imidazole ou un dérivé de celui-ci, un composé organique contenant un ou plusieurs groupes carboxyle ou des sels d'acides carboxyliques, un composé organique contenant un ou plusieurs groupes pyridinium ou pyrazine, une ou plusieurs bases de Schiff, le benzotriazole, le mercaptobenzothiazole, la quinoléine, l'acide quinaldique ou le quinoléinol, l'acide H₂TiF₆ et ses dérivés, les phosphates, les nitrites, les silicates, les molybdates, les borates, les iodates, les permanganates, les tungstates, les vanadates, les cations d'un ou plusieurs métaux choisis dans le groupe consistant en les lanthanides, le magnésium, le calcium, le titane, le zirconium, l'yttrium, le chrome et l'argent, les alcoxysilanes et leurs dérivés contenant des groupes amino, imino, carboxy, isocyanato ou thiocyanato, les esters de silyle, les alcoxysilanes halogénés, les silazanes et des dérivés ou mélanges de ceux-ci,
et dans lequel le biocide comprend un composé choisi dans le groupe consistant en les composés de tributylétain et d'autres dérivés d'organoétain, les composés de cuivre, les composés ammonium quaternaire (Quats), le chlorothalonil, le bis(thiocyanate) de méthylène, le captan, le triphénylbore de pyridinium, le diuron, une alkylisothiazoline halogénée, une isothiazolone substituée telle que la 4,5-dichloro-2-n-octyl-4-iso-thiazolin-3-one (DCOIT), le thiurame, un disulfure de tétraalkylthiurame et leurs dérivés, l'oxyde de zinc, la pyrithione zinc, l'éthylènebis(dithiocarbamate) de zinc (Zineb), la pyrithione de cuivre, le dichlorofluanide, le pyridine TCMS et le thiocyanométhylthiobenzothiazole (TCMTB), les halogénures de composés ammonium quaternaire de triméthoxysilyle (composés d'alcoxysilyle quaternaires), le 2-méthyl-thio-4-t-butylamino-6-cyclopropyl-amino-s-triazine (irgarol), le 2-thiocyanométhylthio)benzothiazole, le 2,4,5,6-tétra-chloro-isophtalonitrile, le tolylfluanide, la 2,3,5,6-tétra-chloro-4-(méthylsulfonyl)pyridine et des dérivés ou mélanges de ceux-ci.

2. Pigment selon la revendication 1, dans lequel les réservoirs comprennent des particules mésoporeuses ayant une taille moyenne de pore de 1 nm à 200 nm.

3. Pigment selon la revendication 1 ou 2, dans lequel les réservoirs avec un intérieur poreux ou vide comprennent des particules d'oxyde, de nitrure, de carbure ou de fluorure mésoporeuses ou microporeuses, des halloysites, des argiles minérales, des zéolites, des hydroxydes doubles en couches (LDH), des nanotubes de carbone, des matériaux de carbone méso- et microporeux, des gels de polymère et des matériaux oxyde, nitrure, carbure ou fluorure noyau-coque avec un intérieur interne vide et une coque poreuse.

4. Pigment selon l'une quelconque des revendications 1 à 3, dans lequel les bouchons sensibles aux stimuli comprennent des produits d'une réaction chimique interfaciale entre a) un inhibiteur ou biocide encapsulé selon la revendication 1 ou un solvant/agent dispersant utilisé pour l'incorporation de l'inhibiteur ou biocide dans le réservoir et b) au moins un composé choisi dans le groupe consistant en les composés ioniques, dont les sels métalliques et les polyélectrolytes, les biopolymères tels que les protéines, les acides aminés, les polysaccharides, tels que la caséine, la lactoglobuline, l'albumine, la kératine, la myosine, la tubuline, le collagène (gélatine), le lysozyme, l'agarose, la cellulose, l'acide alginique, le dextran, le chitosan, la polyarginine, la polyglycine, le poly(acide glutamique), le poly(acide aspartique), et des dérivés, copolymères ou mélanges de ceux-ci.

5. Pigment selon l'une quelconque des revendications 1 à 4, dans lequel les bouchons sensibles aux stimuli comprennent les produits d'une réaction chimique interfaciale entre a) un inhibiteur ou biocide encapsulé selon la revendication 1 ou un solvant/agent dispersant utilisé pour incorporation de l'inhibiteur ou biocide dans le réservoir et b) au moins un composé choisi dans le groupe consistant en des composés ayant des fractions isocyanate, acrylate, cyanoacrylate, vinyle, époxy, hydroxyle, amino ou imino, des acides gras polyinsaturés, des huiles siccatives et des dérivés, comonomères ou mélanges de ceux-ci.

6. Pigment selon la revendication 4 ou 5, dans lequel les bouchons sensibles aux stimuli comprennent les produits d'une réaction chimique interfaciale entre a) un inhibiteur ou biocide encapsulé selon la revendication 1 et au moins un composant b) tel que défini dans la revendication 4 ou 5.

7. Pigment selon la revendication 4 ou 5, dans lequel les produits de ladite réaction chimique interfaciale comprennent un complexe ionique ou un agrégat qui est la conséquence d'interactions covalentes entre au moins un composant a) et au moins un composant b) tel que défini dans la revendication 4 ou 5.

8. Pigment selon la revendication 6, dans lequel les produits de ladite réaction chimique interfaciale comprennent un complexe ionique ou un agrégat qui est la conséquence d'interactions covalentes entre a) un inhibiteur ou biocide encapsulé selon la revendication 1 et au moins un composant b) tel que défini dans la revendication 4 ou 5.

9. Procédé de préparation du pigment selon l'une quelconque des revendications 1 à 8, comprenant les étapes de :
a) fourniture de réservoirs avec des dimensions moyennes dans la plage de 10 à 50 000 nm ayant une surface/interface poreuse et un intérieur poreux ou vide ;
b) introduction d'un inhibiteur de corrosion et/ou biocide dans les réservoirs ;
c) mise en contact des réservoirs contenant l'inhibiteur de corrosion et/ou biocide après l'étape b) avec au moins un composé externe capable de réagir avec l'inhibiteur de corrosion et/ou biocide ou le solvant/agent dispersant utilisé pour introduire l'inhibiteur ou biocide dans le réservoir ;
d) mise en réaction du composé externe avec l'inhibiteur de corrosion et/ou biocide ou le solvant/agent dispersant utilisé pour introduire l'inhibiteur ou biocide pour former des bouchons sensibles aux stimuli à l'interface entre le milieu brut cernant le réservoir et contenant ledit composé externe et l'extrémité externe de pores du réservoir.

10. Procédé selon la revendication 9, qui comprend l'ultrasonication des réservoirs contenant l'inhibiteur de corrosion et/ou biocide obtenus dans l'étape b) ou du mélange obtenu dans l'étape c).

11. Procédé selon la revendication 9 ou 10, dans lequel la réaction chimique est une polymérisation, en particulier une polymérisation à radicaux libres, et l'au moins un composé externe comprend un ou plusieurs monomères.

12. Procédé selon l'une quelconque des revendications 9 à 11, dans lequel le composé externe est fourni sous la forme d'une émulsion huile dans l'eau.

13. Procédé de prévention ou d'inhibition de la corrosion ou de la salissure d'un produit métallique ou de polymère comprenant l'incorporation du pigment selon l'une quelconque des revendications 1 à 8 à des prétraitements, des apprêts, des couches de finition, des formulations de revêtements de polymère, revêtements de poudre, peintures et bétons, en particulier sous la forme d'une poudre, d'une pâte ou d'une suspension.
